# EUROPÄISCHE PATENTSCHRIFT

(11) **EP 0 819 965 B1**
(45) Veröffentlichungstag und Bekanntmachung des Hinweises auf die Patenterteilung: **17.10.2001**
(21) Anmeldenummer: 97111492.1
(22) Anmeldetag: 08.07.1997
(51) Int. Cl.: G02B 27/02, G03B 42/08, G01T 1/115, G01T 1/29, H04N 1/028

(54) **Verfahren und Vorrichtung zum Aufnehmen einer Bildinformation**
Method and device for recording an image information
Méthode et appareil pour enregistrer une information d'images

(30) Priorität: 20.07.1996 DE 19629299
(43) Veröffentlichungstag der Anmeldung: 21.01.1998
(73) Patentinhaber: Agfa-Gevaert AG, 51373 Leverkusen (DE)
(72) Erfinder: Stahl, Werner, 85551 Heimstetten (DE); Schwelle, Peter, 82362 Weiheim (DE); Brautmeier, Detlef, Dr., 85716 Unterschleissheim (DE)

(56) Entgegenhaltungen:
- DE-A- 2 951 501
- US-A- 4 736 102
- US-A- 4 818 861
- PATENT ABSTRACTS OF JAPAN vol. 015, no. 005 (P-1149), 8.Januar 1991 & JP 02 254408 A (FUJI PHOTO FILM CO LTD), 15.Oktober 1990,

## Beschreibung

Die Erfindung betrifft ein Verfahren und eine Vorrichtung zum Aufnehmen von Licht nach dem Oberbegriff des Anspruchs 1 bzw. des Anspruchs 11.

Derartige Vorrichtungen werden dazu benötigt, Bildinformationen, die sich auf einer stimulierbaren Leuchtstoffplatte befinden, auszulesen. In der medizinischen Röntgendiagnostik werden immer häufiger stimulierbare Phosphorfolien anstelle konventioneller Röntgenblattfilme eingesetzt. Die Phosphorfolien haben gegenüber konventionellen Röntgenfilmen den Vorteil einer nahezu linearen Wiedergabecharakteristik. Die damit erzielbare Bildqualität ist deshalb weitaus unempfindlicher gegenüber zu geringen bzw. zu hohen Dosisleistungen bei der Erzeugung des Röntgenbildes. Ein weiterer Vorteil stimulierbarer Phosphorfolien ist, daß sie wiederverwendbar sind. Sie können nach einer Röntgenaufnahme bzw. nach dem Auslesen der Bildinformationen und dem Einspeichern in elektronische Medien gelöscht und für weitere Röntgenaufnahmen verwendet werden.

Vorteilhaft bei der Verwendung von Phosphorfolien ist weiter, daß sie hinsichtlich ihrer mechanischen Handhabung weitgehend den konventionellen Röntgenblattfilmen ähnlich sind. Bereits vorhandene Be- bzw. Entladegeräte für Röntgenblattfilm-Einrichtungen wie Röntgenblattfilm-Kassetten sind deshalb weitgehend auch für Phosphorfolien verwendbar.

Ein Verfahren und eine Vorrichtung zur Handhabung derartiger, phosphorbeschichteter Folien ist z. B. aus der DE 37 31 203 A1 bekannt. Die Phosphorfolie wird dabei zunächst in eine Röntgenkassette geladen. Anschließend werden in einer Identifikationsstation aufnahmerelevante Daten wie Patientenname, Geburtsdatum, behandelnder Arzt etc. in einen an der Kassette befindlichen Halbleiterspeicher geschrieben. Danach wird die Röntgenaufnahme erstellt. Zum Erfassen der Röntgenbildaufnahme wird die Kassette in ein digitales Lesegerät eingeschoben. Dort wird die Kassette geöffnet, die Phosphorfolie entnommen und die Folie mit einer Abtastvorrichtung stimuliert. Das dabei von der Phosphorfolie ausgesandte Licht wird von einer Lichtsammeleinrichtung aufgenommen und in gerasterte, digitale Bildsignale umgewandelt. Diese Signale können dann in einer digitalen Bildverarbeitungseinrichtung weiter verarbeitet werden.

Die vorliegende Erfindung bezieht sich auf den abtastenden Teil der eingangs genannten Vorrichtung. Beim Abtasten der Bildinformation von der Phosphorfolie kommt es u. a. darauf an, möglichst viel der Strahlungsenergie, die in der Phosphorfolie enthalten ist, zu erfassen. Die Stimulation der Phosphorfolie erfolgt in der Regel durch einen Laserstrahl. Er regt die Phosphorfolie an und stimuliert dadurch, daß die gespeicherte Röntgenenergie durch niederenergetische Strahlung, vorzugsweise sichtbares Licht einer bestimmten Wellenlänge, aus der Phosphorfolie austritt. Aus der DE-OS 29 51 501 ist eine Strahlungsbild-Lesevorrichtung bekannt geworden, die Strahlungsenergie von einer stimulierbaren Leuchtstoffplatte aufnimmt und zu einem Strahlungsdetektor führt.

Nachteilig bei dieser Anordnung ist, daß diejenigen Strahlen, die von der stimulierbaren Leuchtstoffplatte nahezu senkrecht entweichen, nicht oder nur unter einem sehr steilen Eintrittswinkel in die Lichtleiter-Anordnung eindringen. Dies bewirkt, daß diese Strahlen sehr schlecht eingekoppelt werden, wenn die Lichtleiter-Anordnung aus Lichtfasern besteht.

Die JP 02 254 408 A beschreibt einen Lichtsammler, der Lichtleitfasern zum Sammeln des Lichts beidseitig des Einfallsspalts des anregenden Laserstrahls aufweist. An den Lichtleitfasern sind jedoch keine Spiegel angeordnet, und die Anordnung der Lichtleitfasern unterscheidet sich deutlich von der erfindungsgemäßen Anordnung.

Es ist daher Aufgabe der Erfindung, eine Strahlungsbild-Lesevorrichtung anzugeben, mit der ein hoher Anteil des von der Strahlungsbildplatte ausgetretenen Lichts zu einem Fotodetektor geleitet wird.

Diese Aufgabe wird gelöst durch die im Anspruch 1 angegebenen Merkmale. Vorteilhafte Ausführungsformen der Erfindung sind Gegenstand der Unteransprüche.

Erfindungsgemäß ist im Lichteintrittsbereich einer Lichtleiter-Anordnung, mit der das Licht von dem abzutastenden Medium zu dem Fotodetektor geführt wird, ein Spiegel so angeordnet, daß er sich bezüglich eines Laserstrahls, der das Medium beleuchtet, auf der Seite der Lichtleiter-Anordnung befindet. Hierdurch läßt sich das vom Medium kommende Licht optimal in die Lichtleiter-Anordnung einkoppeln. Insbesondere bei der Verwendung von Lichtfasern als Lichtleiter lassen sich damit über die gesamte Eintrittsfläche der Lichtleiter-Anordnung günstige Einkoppelwinkel, d. h. solche, die im wesentlichen senkrecht zur Eintrittsfläche der Fasern stehen und damit kleiner als der Akzeptanzwinkel der Lichtfasern sind, erreichen. Der Akzeptanzwinkel ist der größte zulässige Winkel für den die einfallende Strahlung in der Faser weitergeleitet wird.

Des weiteren läßt sich durch die erfindungsgemäße Anordnung die Lichtleiter-Anordnung bezüglich des abzutastenden Mediums derart anordnen, daß die Eintrittsfläche der Lichtleiter-Anordnung gegenüber der Ebene, in der das Medium liegt, einen relativ geringen Neigungswinkel hat. Die Lichtleiter-Anordnung ist dabei in unmittelbarer Nähe des abtastenden Laserstrahls angeordnet. Dadurch lassen sich diejenigen Strahlen des abzutastenden Mediums, welche nahe des eintretenden Laserstrahls abgestrahlt werden, zu einem großen Teil in die Lichtleiter-Anordnung einkoppeln. Diese Anordnung ist insbesondere vorteilhaft bei der Abtastung stimulierbarer Leuchtstoffplatten, weil deren räumliche Abstrahlcharakteristik im wesentlichen eine sog. Lambertstrahler-Charakteristik ist, daß also die größte Strahlintensität in senkrechter Richtung von der lichtaussendenden Ebene abgestrahlt wird.

Bei einer vorteilhaften Ausführungsform der Erfindung ist der Spiegel an der Lichtleiter-Anordnung befestigt. Dadurch läßt sich die Justage der Spiegel-Anordnung relativ zur Lichtleiter-Anordnung wesentlich erleichtern, weil Relativbewegungen, insbesondere bei Erschütterungen der Auslesevorrichtung, kaum möglich sind.

Die Spiegel-Anordnung ist dabei so, daß die in die Lichtleiter-Anordnung eingekoppelten Strahlen einen Eintrittswinkel haben, der höchstens so groß ist wie der durch die Lichtfasern der Lichtleiter-Anordnung vorgegebenen, maximalen Einkoppel- oder Akzeptanzwinkel. Dieser liegt typisch bei ca. 30°.

Die Oberfläche der Spiegel-Anordnung weist ein Krümmungsprofil auf, durch das seitlich vom Medium abgestrahlte Strahlen so reflektiert werden, daß sie möglichst steil, im wesentlichen senkrecht, auf die Lichtleiter-Anordnung auftreffen. Vorzugsweise ist die Spiegeloberfläche so vergütet, daß sich für die Wellenlänge der abgestrahlten Strahlen eine besonders hoher Reflexionskoeffizient ergibt.

Bei einem weiteren, bevorzugten Ausführungsbeispiel sind bezüglich des Lichtstrahls, der das abzutastende Medium beleuchtet, beidseitig Lichtleiter-Anordnungen mit daran befestigten Spiegeln angebracht. Dabei ist es besonders vorteilhaft, die Lichtfasern der beiden Lichtleiter-Anordnungen im Bereich des lichtdetektierenden Elements (Photomultiplier) zusammenzuführen, wobei die Form des zusammengeführten Endstückes an die Form des lichtsammelnden Elements angepaßt ist. Vorteilhafterweise ist dabei die Endfläche der beiden zusammengeführten Lichtleitelemente sowie die Fläche des Photomultipliers jeweils ein Kreis. Auch andere Formen wie eine Rechteckform sind aber möglich.

Einzelheiten der Erfindung werden nachfolgend anhand von Ausführungsbeispielen und Figuren näher erläutert.

Es zeigen:
- Fig. 1: eine Lichtleiter-Anordnung,
- Fig. 2: ein Röntgensystem, basierend auf stimulierbaren Phosphorfolien,
- Fig. 3: eine Lichtleiter-Anordnung nach dem Stand der Technik,
- Fig. 4: eine erfindungsgemäße Lichtleiter-Anordnung und
- Fig. 5: Einzelheiten einer erfindungsgemäßen Lichtleiter-Anordnung.

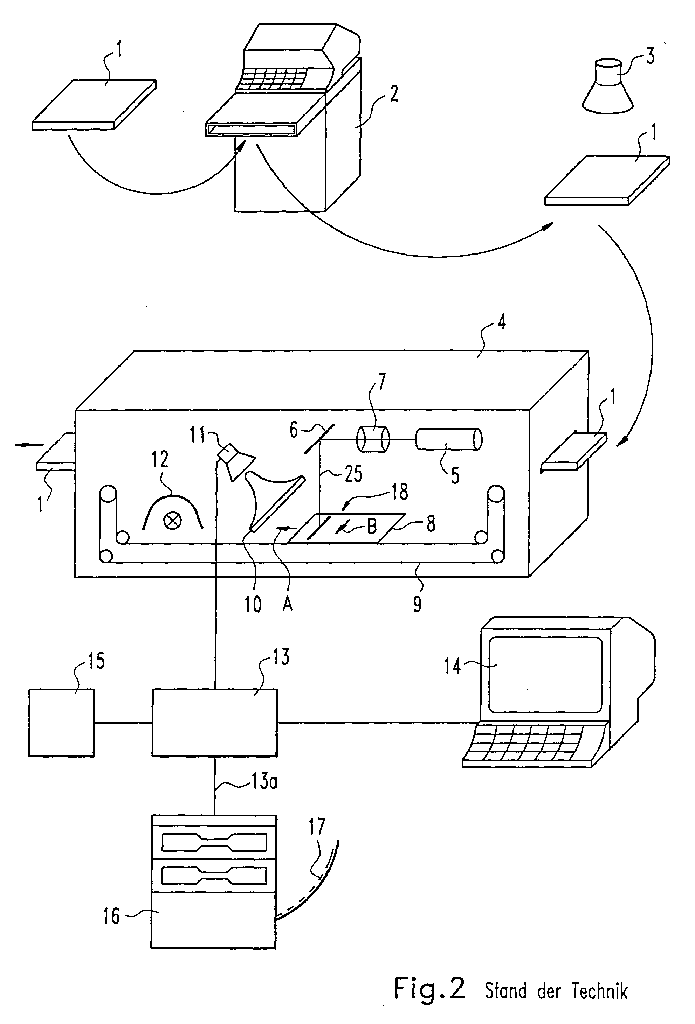

In Fig. 2 sind die für ein digitales Radiografieverfahren verwendeten, eingangs bereits erwähnten Einrichtungen dargestellt. Eine Röntgenkassette 1 ist mit einer stimulierbaren Bildplatte, insbesondere einer Phosphorfolie beladen. Sie wird in eine Identifikationsstation 2 eingeführt, in der aufnahmerelevante Daten in einen in der Kassette befindlichen Halbleiterspeicher geschrieben werden. Über eine Eingabekonsole sind verschiedene Daten wie Patientenname, Aufnahmebereich, behandelnder Arzt etc., eingebbar. Dabei kann vorgesehen werden, eine digitale Patientendatenkarte zu lesen und die Daten direkt an den Halbleiterspeicher der Kassette zu übertragen. Außerdem können aus bestimmten Auswahl-Menüs gewünschte Auswerteparameter für die Phosphorfolie festgelegt werden. Nach der Identifizierung der Kassette wird die Röntgenaufnahme unter einer Röntgenröhre 3 erstellt. Die Phosphorfolie trägt das Röntgenbild als latentes Bild. Zum Auslesen dieses latenten Bildes wird die Röntgenkassette 1 in eine digitale Abtastvorrichtung 4 eingegeben. Dort öffnet eine nicht näher gezeigte mechanische Einrichtung die Röntgenkassette 1 und entnimmt die Phosphorfolie 8. Über eine Transporteinrichtung 9 wird die Phosphorfolie dann einer Lesestation 18 zugeführt. Die Lesestation 18 umfaßt einen Laser 5, einen beweglichen Spiegel 6, ein Objektiv 7, eine Lichtleiter-Anordnung 10 sowie einen Photomultiplier 11. Der Laser 5 sendet einen Lichtstrahl 25 aus, mit dem die stimulierbare Phosphorfolie 8 anregbar ist. Die Wellenlänge des Lichtstrahls 25 kann im infraroten, roten oder grünen Wellenlängenbereich liegen, je nachdem, welcher Phosphorfolientyp vorliegt. Das Licht wird über das Objektiv 7 auf die Phosphorfolie 8 fokussiert. Der bewegliche Spiegel 6 (Schwingspiegel oder rotierender Polygonspiegel) richten die Laserstrahlung in Richtung B punkt- und zeilenweise auf die Phosphorfolie 8. In den Bereichen, in denen das latente Röntgenbild auf der Folie ist, wird Stimulationslicht von der Phosphorfolie 8 ausgesandt. Dieses Licht wird von den Lichtleitern 10 gesammelt und an den Photomultiplier 11 abgegeben, der die Signale verstärkt. Anschließend werden die Signale digitalisiert und an einen Computer 13 mit Bildspeicher weitergeleitet. Die Signale können nach an sich bekannten Verfahren zusätzlich Filterstufen wie einen Antialiasing-Filter durchlaufen und/oder elektronisch komprimiert werden. Während des Auslesens wird die Phosphorfolie 8 von einem Transportband 9 in einer Slow-Scan-Richtung A transportiert.

Nach dem Abtasten der Phosphorfolie 8 wird diese durch eine Löscheinrichtung 12 gelöscht. Anschließend wird die Röntgenkassette 1 wieder mit derselben Phosphorfolie 8 beladen und steht für die nächste Röntgenaufnahme zur Verfügung.

Vom Computer 13 ist das digitalisierte Bild in einem Digitalspeicher 15 speicherbar, an einem Diagnosebildschirm 14 auswertbar oder über eine digitale Schnittstelle 13a an ein Hardcopy-Gerät 16 ausgebbar, das das Bild als Ausdruck auf fotografischem Film 17 wiedergibt. Über die Schnittstelle 13a sind die Bilddaten auch an beliebige andere digitale Bildsysteme weiterleitbar.

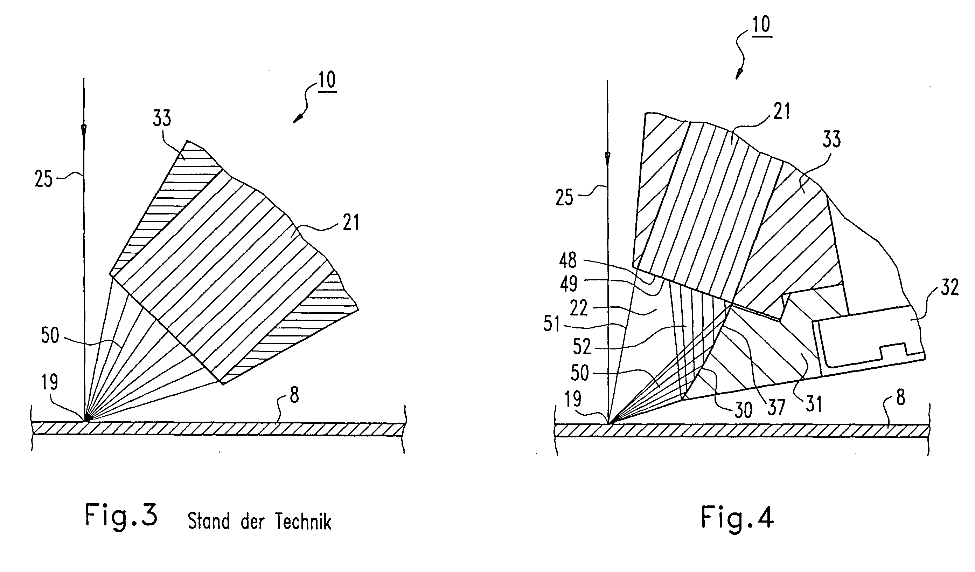

Fig. 3 zeigt Details einer Lichtleiter-Anordnung, wie sie beispielsweise in dem von der Anmelderin vertriebenen System Agfa Diagnostic Center (ADC 70) erhältlich ist.

Die Figur zeigt den Laserstrahl 25, der am Punkt 19 auf die stimulierbare Phosphorfolie 8 trifft. Das durch den Laserstrahl 25 stimulierte Licht wird gemäß einer Lambert'schen Strahlungsverteilung in den über der Phosphorfolie 8 liegenden Raum abgestrahlt. Derart stimulierte Lichtstrahlen 50 werden von der Lichtleiter-Anordnung 10 aufgenommen. Sie weist eine Vielzahl von Lichtleiterfasern 21 auf, die in einem Faser-Modul 33 gehalten werden. Wie der Figur zu entnehmen ist, treffen die stimulierten Lichtstrahlen 50 im Zentrum des Faser-Moduls 33 im wesentlichen senkrecht auf die Endflächen der Lichtleitfasern 21, während sie in den Randbereichen des Faser-Moduls unter einem relativ flachen Winkel in die Fasern eingekoppelt werden. Der in die Lichtleiter-Anordnung 10 eingekoppelte Anteil des Lichts ist deshalb im Randbereich des Faser-Moduls 33 geringer als in dessen Zentrum.

Fig. 4 zeigt ein erstes Ausführungsbeispiel der Erfindung. Ein Laserstrahl 25 stimuliert wiederum an einem Auftreffpunkt 19 einer Phosphorplatte 8 die darin gespeicherte Energie. Vom Auftreffpunkt 19 treten Lichtstrahlen 50 aus der Phosphorfolie 8 aus. Von den stimulierten Strahlen tritt ein Teil direkt in die Eintrittsfläche 49 der Lichtleiter-Anordnung 10, d. h. in die Lichtfasern 21 ein. Die Lichtfasern 21 sind in einer Kern-Mantel-Struktur aufgebaut und haben typische Akzeptanzwinkel von etwa 30° um die Senkrechte zur Eintrittsfläche 49. Sie sind aus Kunststoff, könnten aber genausogut in Glas ausgeführt sein. Ihre Faserenden 48 sind im wesentlichen plan und senkrecht zu ihrer Längsrichtung geschnitten oder geschliffen. Die Fasern 21 sind geordnet, d. h. im wesentlichen parallel zueinander, in ein Faser-Modul 33 gefaßt, insbesondere darin eingeklebt. Am Faser-Modul 33 ist ein Spiegelblock 31 befestigt, dessen Spiegelfläche 30 hochreflektierend für Licht derjenigen Wellenlänge ist, das die Bildplatte 8 als stimuliertes Licht abgibt. Dieses Licht kann z. B. grün oder blau sein oder auch in einem Wellenlängenbereich außerhalb des sichtbaren Lichts liegen, z. B. im UV-Bereich. Die Wellenlänge des Laserstrahls 25 ist der Bildplatte 8 angepaßt und liegt im sichtbaren Wellenlängenbereich, z. B. bei 633 nm, oder auch im Infrarot-Bereich. Das stimulierte Licht hat dabei typischerweise eine kürzere Wellenlänge als das stimulierende Licht.

Die Spiegelfläche 30 kann mit einer optischen Vergütungsschicht 37 versehen sein, so daß sie das stimulierte Licht besser reflektiert als das stimulierende Licht des Laserstrahls 25. Der Spiegelblock 31 ist beispielsweise mit Schrauben 32 an dem Lichtfaser-Modul befestigt. Die Spiegeloberfläche 30 kann eben sein. Im gezeigten Ausführungsbeispiel ist sie jedoch gekrümmt. Dadurch kann der Vorteil erreicht werden, daß das Licht im Lichteintrittsbereich 22 der Lichtleiter-Anordnung optimal in die Lichtleitfasern 21 eingekoppelt wird. Die Spiegeloberfläche 30 kann entsprechend geformt werden, so daß alle im Lichteintrittsbereich 22 der Lichtleiter-Anordnung 10 befindlichen Lichtstrahlen so steil auf die Faserenden 48 treffen, daß sie innerhalb der Faser die Totalreflexionsbedingung der Faser erfüllen. Versuche haben gezeigt, daß mit der Anordnung gemäß Fig. 4 im Vergleich zu einer Anordnung gemäß Fig. 3 am Ausgang der Lichtfasern wesentlich mehr Fasern hell sind, d. h. daß am Eingang mehr Licht in die Fasern eingekoppelt werden kann, also mehr Licht die Bedingung der Totalreflexion im Faserinneren erfüllt.

Durch die Struktur gemäß Fig. 4 läßt sich auch erreichen, daß der am steilsten von der Bildplatte 8 wegreflektierte Strahl 51, der noch in die Lichtleitfasern 21 eingekoppelt wird, im wesentlichen senkrecht eingekoppelt wird. Dieser Strahl 51 ist aufgrund der Lambert'schen Strahlungscharakteristik der stimulierten Strahlung am hellsten. Durch die im wesentlichen senkrechte Einkopplung in die Lichtleitfasern wird er optimal, d. h. mit geringsten Verlusten, zum ausgangsseitigen Ende der Lichtfasern geleitet.

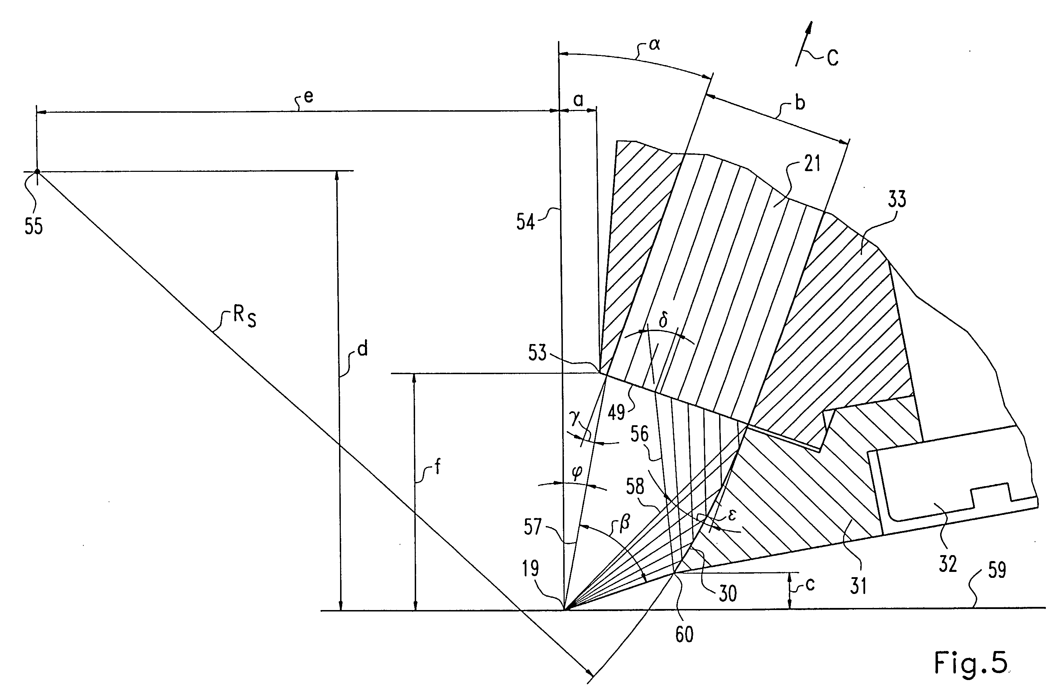

Fig. 5 zeigt geometrische Details der Lichtleiter-Anordnung gemäß Fig. 4. Mit 59 ist dabei die Ebene bezeichnet, in der die Oberfläche der Bildplatte 8 liegt. 54 bezeichnet die Senkrechte zur Ebene 59, welche durch den Bildpunkt 19 geht. Die Oberkante 53 des Faser-Moduls 33 ist in einem Abstand a = 1,0 mm entfernt. Der Abstand f der Kante 53 von der Bildplatte 59 beträgt 6,5 mm. Die Breite b der Lichtfasern 21 beträgt 4,0 mm. Die Fasern sind entlang der Richtung C im Faser-Modul 33 parallel zueinander angeordnet. Sie sind gegenüber der Mittelsenkrechten 54 um einen Winkel α im Bereich zwischen 10 und 30°, vorzugsweise um 20° geneigt.

Die Spiegelfläche 30 ist zylindrisch gekrümmt. Ihr Krümmungsradius beträgt Rₛ = 20,1 mm. Der Abstand d ihres Krümmungsmittelpunkts 55 von der Ebene 59 beträgt 11,9 mm, sein Abstand e der Mittelsenkrechten 54 beträgt 13,9 mm. Der Radius Rₛ kann in einem Bereich von 10 bis 30 mm liegen. Der Abstand c der Unterkante 60 des Spiegels 30 liegt bei 1 mm. Je kleiner dieser Abstand ist, desto mehr Licht kann mit dem Spiegel 30 in die Lichtfaser-Anordnung 21 eingekoppelt werden. Die gesamte Anordnung kann deshalb auch näher an die Oberfläche 59 der Bildplatte 8 herangerückt werden.

Die Krümmung der Spiegeloberfläche 30 ist an die Form der Eintrittsfläche 59 der Faseranordnung 21 angepaßt. Bei der in Fig. 5 gezeigten Ausführungsform ist eine zylindrische Spiegeloberfläche 30 gewählt worden. Dabei ist klar, daß auch elliptische oder andersartig gekrümmte Oberflächen vorteilhaft sein können. Sie ergeben sich aus den optischen Randbedingungen. Eine optimale Krümmungsfläche kann beispielsweise durch Interpolation der idealen Reflexionspunkte auf einer idealen Reflexionsfläche erzeugt werden. Die Figur 5 zeigt, daß die Einkoppelwinkel in die Lichtfaser-Anordnung 21 derjenigen Strahlen 56, 57 und 58, die in Randbereichen der Eintrittsfläche 49 auftreffen, immer noch so groß sind, daß innerhalb der Fasern 21 eine ausreichende Totalreflexion zur Leitung des Lichts gewährleistet ist. Die Einkoppelwinkel γ, δ und ε für die Strahlen 57, 56 und 58 betragen 9,5°, 25,4° und 24,7°, d. h. sie liegen alle unterhalb des maximalen Faser-Einkoppelwinkels von 30°. Der gesamte, mit der Faser-Anordnung einkoppelbare Winkel β beträgt 71,6°. Der stärkste Strahl 57 des Lambert'schen Strahlungsfeldes, welcher noch einkoppelbar ist, ist derjenige, der um einen Winkel ϕ = 10,5° von der Mittelsenkrechten 54 entfernt liegt.

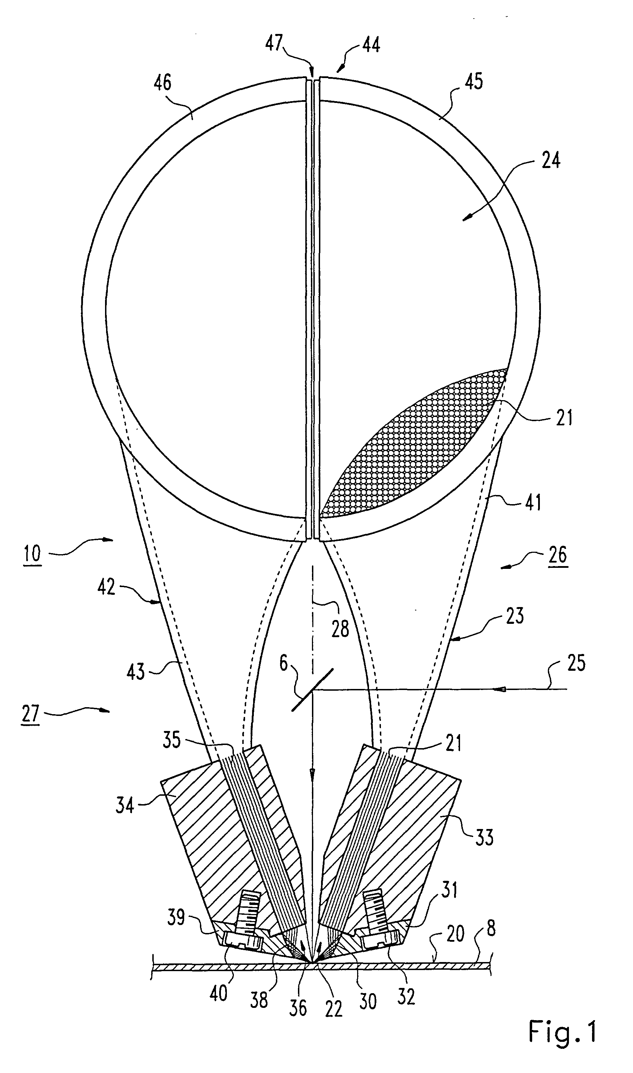

Fig. 1 zeigt eine weiter verbesserte Ausführungsform einer Lichtleiter-Anordnung 10. Sie beruht darauf, daß zwei gleichartige, spiegelweise zueinander angeordnete Lichtleitelemente spiegelsymmetrisch zum abtastenden Laserstrahl 25 angeordnet sind. Der Laserstrahl 25 teilt den Raum oberhalb der Bildplatte 8 in zwei Halbräume 26 und 27. Die Trennlinie 28 teilt die beiden Halbräume 26, 27. Im ersten Halbraum 26 ist ein Faser-Modul 33 angeordnet, im zweiten Halbraum 27 ein Faser-Modul 34. Beide Faser-Module können gemäß dem Ausführungsbeispiel der Fig. 4 ausgestaltet sein. Die Faser-Module sind im Bereich des einfallenden Laserstrahls 25 so geformt, daß dieser gerade noch auf die Bildplatte 8 auftreffen kann, ohne an einem der beiden Faser-Module zu reflektieren. Von der Oberfläche 20 der Phosphorfolie 8 aus werden wiederum stimulierte Lichtstrahlen in den Raum oberhalb der Phosphorfolie 8 abgestrahlt.

Das Faser-Modul 34 weist - wie das Faser-Modul 33 - Lichtfasern 35 auf, welche Licht von dem Lichteintrittsbereich 36 über einen Lichtleitungsbereich 42 zu einem Lichtaustrittsbereich 24 der Lichtleiter-Anordung 10 führen. Das Faser-Modul 33 geht ebenfalls in einen Lichtleitungsbereich 23 über, der am Lichtaustrittsbereich 24 endet. Das Faser-Modul 34 weist ebenfalls einen Spiegel 38 an einem Spiegelblock 39 auf. Dieser Spiegelblock 39 ist beispielsweise mit Schrauben 40 am Faser-Modul 34 befestigt. In den Lichtleitungsbereichen 23, 42 sind die Fasern 21 und 35 jeweils lose geführt. Sie sind in diesem Ausführungsbeispiel mit lichtdichten Textil-Abdeckungen 41 und 43 ummantelt. Im Lichtaustrittsbereich 24 sind die Lichtfasern 21, 35 in einer Fassung 44 eingebettet. Die Fasern der beiden Module 33 und 34 sind dabei jeweils in einem halbkreisförmigen Metallgestell 40 bzw. 46 eingebettet. Sie sind an einer Stoßkante 47 aneinandergelegt. Die gesamte Lichtleiter-Anordnung 10 hat damit einen kreisförmigen Austritts-Querschnitt. Er ist an das Lichteintrittsfenster des Photomultipliers 11 angepaßt, dessen Form ebenfalls kreisförmig ist.

Es wurden Ausführungsbeispiele der Erfindung beschrieben. Dabei ist klar, daß der Fachmann ohne weiteres Abwandlungen angeben kann. Beispielsweise kann der Lichtaustrittsbereich der Lichtleiter-Anordnung statt eines kreisförmigen auch einen rechteckigen oder quadratischen oder andersartig geformten Querschnitt haben, der dem Querschnitt eines entsprechenden geformten Photomultiplier-Eintrittsfensters angepaßt ist. Schließlich kann der Laserstrahl, der in den Ausführungsbeispielen jeweils senkrecht auf die Bildplatte fällt, auch schräg auf diese gerichtet sein.

## Patentansprüche

1. Strahlungsbildlesevorrichtung zum Lesen der auf einer stimulierbaren Leuchtstoffplatte (8) aufgezeichneten Informationen, mit einem Lichteinfallsspalt, der durch zwei im Abstand angeordnete Lichtleiter gebildet wird und einer Anordnung (5, 6, 7) zum Aussenden eines Laserstrahls (25), der entlang des Lichteinfallsspalts in einer Abtastrichtung (y) über die Leuchtstoffplatte (8) geführt wird und Bildpunkte (19) zum Emittieren von Strahlung anregt, wobei die Lichtleiter Eintrittsflächen (49) aufweisen, die die emittierte Strahlung sammeln, **dadurch gekennzeichnet, daß** die Lichtleiter eine Vielzahl von Lichtleitfasern (21, 35) aufweisen und so positioniert sind, **daß** die Randstrahlen (58), die von dem jeweiligen Bildpunkt (19) zu der dem Lichteinfallsspalt abgewandten Seite der Lichtleiter emittiert werden, mit dem Lot auf die Eintrittsflächen (49) einen Winkel (ε) bilden, der kleiner dem Akzeptanzwinkel der Lichtleitfasern (21, 35) ist, **daß** die Eintrittsflächen (49) der Lichtleiter gegenüber der Leuchtstoffplatte (8) um einen Winkel (α) zwischen 10° und 30° geneigt sind und an beiden Lichtleitern je ein Spiegel befestigt ist..

2. Vorrichtung nach Anspruch 1, **dadurch gekennzeichnet, daß** der Spiegel (30) plan ist.

3. Vorrichtung nach Anspruch 1, **dadurch gekennzeichnet, daß** der Spiegel (30) gekrümmt ist.

4. Vorrichtung nach Anspruch 3, **dadurch gekennzeichnet, daß** der Krümmungsradius (Rs) des Spiegels (30) im Bereich von 10 mm bis 30 mm, insbesondere bei 20 mm liegt.

5. Vorrichtung nach Anspruch 1, **dadurch gekennzeichnet, daß** die Oberfläche des Spiegels (30) mit einer Vergütungsschicht (37) versehen ist, die für das emittierte Licht eine stärkere Reflexion bewirkt als für das stimulierende Licht.

6. Vorrichtung nach Anspruch 1, **dadurch gekennzeichnet, daß** die beiden Lichtleiter im Lichtaustrittsbereich (24) an einem gemeinsamen Fotodetektor (11) zusammengeführt sind.

7. Vorrichtung nach Anspruch 6, **dadurch gekennzeichnet, daß** der Fotodetektor (11) ein Photomultiplier ist.

8. Vorrichtung nach Anspruch 3, **dadurch gekennzeichnet, daß** die Spiegeloberfläche (30, 38) Ellipsenform aufweist, wobei einer der beiden Brennpunkte der Ellipse auf der Oberfläche der abzutastenden Leuchtstoffplatte (8) liegt.

9. Vorrichtung nach einem der vorhergehenden Ansprüche, **dadurch gekennzeichnet, daß** sich der Querschnitt der Lichtleiter von einem im wesentlichen rechteckigen, starren Querschnitt über einen flexiblen Bereich zu einem zweiten, starren Querschnitt wandelt, wobei der zweite Querschnitt hinsichtlich Größe und Form an den Querschnitt des Eintrittsbereichs des Fotodetektors (11) angepaßt ist.

10. Vorrichtung nach Anspruch 9, **dadurch gekennzeichnet, daß** der zweite Querschnitt halbkreisförmig ist.

11. Verfahren zum Aufnehmen einer in einer stimulierbaren Leuchtstoffplatte (8) gespeicherten Bildinformation, wobei die Leuchtstoffplatte mit einem Laserstrahl (25) geeigneter Wellenlänge abgetastet und das dadurch emittierte Licht der Leuchtstoffplatte (8) fotoelektrisch in elektronische Signale umgewandelt wird, **dadurch gekennzeichnet, daß** das emittierte Licht mit einer Vorrichtung nach einem der Ansprüche 1 bis 13 von der Leuchtstoffplatte (8) zum Fotodetektor (11) geleitet wird, wobei die Randstrahlen (58), die von dem jeweiligen Bildpunkt (19) zu der dem Lichteinfallsspalt abgewandten Seite der Lichtleiter emittiert werden, auch noch voll erfaßt werden.

## Claims

1. Radiation image reading device for reading the items of information recorded on a stimulable phosphor plate (8) having a light incidence gap that is formed by two optical waveguides disposed at a distance, and an arrangement (5, 6, 7) for emitting a laser beam (25) that is guided along the light incidence gap in a scanning direction (y) over the phosphor plate (8) and excites pixels (19) to emit radiation, wherein the optical waveguides have entry surfaces (49) that collect the emitted radiation, **characterized in that** the optical waveguides have a plurality of optical waveguide fibres (21, 35) and are positioned in such a way that the peripheral beams (58) that are emitted from the respective pixel (19) to that side of the optical waveguides remote from the light incidence gap form with the normal to the entry surfaces (49) an angle (∈) that is smaller than the acceptance angle of the optical waveguide fibres (21, 35) and **in that** the entry surfaces (49) of the optical waveguides are inclined at an angle (α) of between 10° and 30° to the phosphor plate (8) and a mirror is attached to each of the two optical waveguides.

2. Device according to Claim 1, **characterized in that** the mirror (30) is plane.

3. Device according to Claim 1, **characterized in that** the mirror (30) is curved.

4. Device according to Claim 3, **characterized in that** the radius of curvature (Rs) of the mirror (30) is in the range from 10 mm to 30 mm, in particular 20 mm.

5. Device according to Claim 1, **characterized in that** the surface of the mirror (30) is provided with an antireflection coating (37) that effects a stronger reflection for the emitted light than for the stimulating light.

6. Device according to Claim 1, **characterized in that** the two optical waveguides are brought together at a common photodetector (11) in the light exit region (24).

7. Device according to Claim 6, **characterized in that** the photodetector (11) is a photomultiplier.

8. Device according to Claim 3, **characterized in that** the mirror surface (30, 38) has an elliptical shape, wherein one of the two focal points of the ellipse is situated on the surface of the phosphor plate (8) to be scanned.

9. Device according to one of the preceding claims, **characterized in that** the cross section of the optical waveguides changes from an essentially rectangular, rigid cross section via a flexible region to a second, rigid cross section, wherein the second cross section is matched to the cross section of the entry region of the photodetector (11) in regard to size and shape.

10. Device according to Claim 9, **characterized in that** the second cross section is semicircular.

11. Method of recording an item of image information stored in a stimulable phosphor plate (8) wherein the phosphor plate is scanned with a laser beam (25) of suitable wavelength and the light thereby emitted from the phosphor plate (8) is converted photoelectrically into electronic signals, **characterized in that** the emitted light is conveyed by means of a device according to one of Claims 1 to 13 from the phosphor plate (8) to the photodetector (11), wherein the peripheral beams (58) that are emitted by the respective pixel (19) to that side of the optical waveguide remote from the light incidence gap are also fully detected.

## Revendications

1. Dispositif de lecture d'image de rayonnement servant à lire les informations enregistrées sur une plaque de substance luminescente (8) pouvant être stimulée, avec une fente d'incidence de la lumière, formée par deux guides de lumière disposés à distance, et un dispositif (5, 6, 7) servant à émettre un faisceau laser (25) qui est dirigé le long de la fente d'incidence de la lumière dans une direction de balayage (y) au-dessus de la plaque de substance luminescente (8) et qui excite des points d'image (19) pour leur faire émettre un rayonnement, les guides de lumière comportant des surfaces d'entrée (49) recueillant le rayonnement émis, **caractérisé en ce que** les guides de lumière comportent une pluralité de fibres optiques (21, 35) et sont placés de telle manière que les rayons marginaux (58) qui sont émis par chaque point d'image (19) en direction du côté des guides de lumière tourné à l'écart de la fente d'incidence de la lumière forment, avec la perpendiculaire aux surfaces d'entrée (49), un angle (ε) inférieur à l'angle d'admission des fibres optiques (21, 35), **en ce que** les surfaces d'entrée (49) des guides de lumière sont inclinées par rapport à la plaque de substance luminescente (8) d'un angle (α) compris entre 10° et 30° et **en ce qu'**un miroir est fixé à chacun des deux guides de lumière.

2. Dispositif selon la revendication 1, **caractérisé en ce que** le miroir (30) est plan.

3. Dispositif selon la revendication 1, **caractérisé en ce que** le miroir (30) est courbe.

4. Dispositif selon la revendication 3, **caractérisé en ce que** le rayon de courbure (Rs) du miroir (30) mesure de 10 mm à 30 mm, notamment 20 mm environ.

5. Dispositif selon la revendication 1, **caractérisé en ce que** la surface du miroir (30) est pourvue d'une couche antireflet (37) qui assure une réflexion plus forte de la lumière émise que de la lumière de stimulation.

6. Dispositif selon la revendication 1, **caractérisé en ce que** les deux guides de lumière sont réunis dans la zone de sortie de la lumière (24) à un détecteur photosensible commun (11).

7. Dispositif selon la revendication 6, **caractérisé en ce que** le détecteur photosensible (11) est un photomultiplicateur.

8. Dispositif selon la revendication 3, **caractérisé en ce que** la surface de miroir (30, 38) a une forme elliptique, l'un des deux foyers de l'ellipse étant situé sur la surface du disque de substance luminescente (8) à balayer.

9. Dispositif selon l'une quelconque des revendications précédentes, **caractérisé en ce que** la section des guides de lumière passe, par l'intermédiaire d'une zone flexible, d'une section rigide sensiblement rectangulaire à une seconde section rigide, la seconde section étant adaptée, pour ce qui est de sa taille et de sa forme, à la section de la zone d'entrée du détecteur photosensible (11).

10. Dispositif selon la revendication 9, **caractérisé en ce que** la seconde section est semi-circulaire.

11. Procédé de prélèvement d'une information d'image mémorisée dans une plaque de substance luminescente (8) pouvant être stimulée, la plaque de substance luminescente étant balayée à l'aide d'un faisceau laser (25) de longueur d'onde appropriée et la lumière de la plaque de substance luminescente (8) émise par ce moyen étant convertie de manière photoélectrique en signaux électroniques, **caractérisé en ce que** la lumière émise est conduite à l'aide d'un dispositif selon l'une quelconque des revendications 1 à 10 depuis la plaque de substance luminescente (8) jusqu'au détecteur photosensible (11), les rayons marginaux (58) émis par chaque point d'image (19) en direction du côté des guides de lumière tourné à l'écart de la fente d'incidence de la lumière étant eux aussi complètement captés.
